# EUROPEAN PATENT APPLICATION

(11) **EP 1 489 672 A1**
(43) Date of publication of application: **22.12.2004**
(21) Application number: 03703192.9
(22) Date of filing: 05.02.2003
(51) Int. Cl.: H01M 4/58, H01M 4/02, H01M 10/40, C01B 25/45

(54) **PRODUCTION METHODS FOR POSITIVE ELECTRODE ACTIVE MATTER AND NON-AQUEOUS ELECTROLYTIC BATTERY**

(30) Priority: 14.02.2002 JP 2002037200
(71) Applicant: Sony Corporation, Tokyo 141-0001 (JP)
(72) Inventor: Okawa, Tsuyoshi, Tokyo 141-0001 (JP); Fukushima, Yuzuru, Tokyo 141-0001 (JP)
(74) Representative: Thévenet, Jean-Bruno
(86) International application number: PCT/JP2003/001192
(87) International publication number: WO 2003/069701

(57) **Abstract**

A method for manufacturing a cathode active material comprising: a mixing step of mixing at least Fe₃(PO₄)₂^{·}nH₂O (n designates the number of hydrates and ranges from 0 to 8.) with Li₃PO₄; and a sintering step of sintering a mixed material obtained in the mixing step when the cathode active material represented by a composition of LiₓFe_{1-y}M_{y}PO₄ (M is at least a kind of materials such as Mn, Cr, Co, Cu, Ni, V, Mo, Ti, Zn, AJ, Ga, Mg, B, and Nb, x is located within a range expressed by 0.05 ≤ x ≤ 1.2, and y is located within a range expressed by 0 ≤ y < 0.8.) is synthesized, wherein a half-value width of a maximum diffraction peak of the mixed material in an X-ray diffraction using CuKα ray is 1.0° or smaller.

## Description

### Technical Field

The present invention relates to a method for manufacturing a cathode active material and a non-aqueous electrolyte battery in which a cathode active material represented by LiₓFe_{1-y}M_{y}PO₄ can be synthesized in a stable state.

This application claims a priority based on Japanese Patent Application No. 2002-037200 filed on February 14, 2002 which is to be applied to this application by referring to it.

### Background Art

In recent years, with the progress of an electronictechnology, electronic devices have been progressively highly functional, miniaturized and portable. Since high energy density is required for batteries used in these electronic devices, the study and development of non-aqueous electrolyte batteries have been eagerly advanced. Lithium batteries or lithium-ion secondary batteries among them have an excellent performance such as higher electromotive force as high as 3 V, 4 V than that of conventional batteries, they are utilized for various kinds of portable electronic devices such as camcorders, portable telephones, note book type personal computers, etc.

Presently, as cathode active materials of the lithium-ion secondary batteries, LiCoO₂, LiNiO₂, LiMn₂O₄, etc. are used, because they have high energy density and high voltage. Since these cathode active materials include metal elements having low Clarke number in their compositions, not only a cost is increased, but also the cathode active materials are hardly supplied in a stable manner. Since an influence of these cathode active materials given to an environment is great, new cathode active materials are requested instead of the above-described materials.

To meet the above, the use of LiFePO₄ having an olivine structure as the cathode active materials of the lithium-ion secondary batteries has been proposed. LiFePO₄ has a volume density as large as 3.6 g/cm³ generates a high potential of 3.4 V and has a theoretical capacity as high as 170 mAh/g. Further, since the LiFePO₄ has one Li capable of being electrochemically dedoped under an initial state for one Fe atom, the LiFePO₄ is a promising material as the cathode active material of the lithium-ion battery. Further, since the LiFePO₄ has iron as rich and inexpensive material in view of resources in its composition, the LiFePO₄ is more inexpensive and gives a less influence to an environment than those of the above-described LiCoO₂, LiNiO₂, LiMn₂O₄, etc.

However, LiFePO₄ has been hardly synthesized in a stable manner. Conditions for synthesizing the LiFePO₄ have not been adequately apparent, so that it has been impossible to decide whether the LiFePO₄ is good or not until a product is obtained. Therefore, it has not been frequently recognized that the LiFePO₄ is inferior as the active material until the product is obtained by using it as the active material. Consequently, the cost or processes have been wastefully consumed.

### Disclosure of the Invention

It is an object of the present invention to provide a new method for manufacturing a cathode active material and a non-aqueous electrolyte battery that can solve the problems of the conventionally proposed cathode active material and the non-aqueous electrolyte battery as mentioned above.

It is another object of the present invention to provide a method for manufacturing a cathode active material and a non-aqueous electrolyte battery that can decide whether a product is good or not during a step of synthesizing the cathode active material and make clear synthesizing conditions.

A method for manufacturing a cathode active material according to the present invention comprises: a mixing step of mixing at least Fe₃(PO₄)₂^{·}nH₂O (n designates the number of hydrates ranging from 0 to 8.) with Li₃PO₄; and a sintering step of sintering a mixed material obtained in the mixing step when the cathode active material represented by a composition of LiₓFe_{1-y}M_{y}PO₄ (M is at least a kind of materials such as Mn, Cr, Co, Cu, Ni, V, Mo, Ti, Zn, AJ, Ga, Mg, B, and Nb, x is located within a range expressed by 0.05 ≤ x ≤ 1.2, and y is located within a range expressed by 0 ≤ y < 0.8.) is synthesized, wherein a half-value width of a maximum diffraction peak of the mixed material in an X-ray diffraction using CuKα ray is 1.0° or smaller.

In the method for manufacturing a cathode active material according to the present invention, since the half-value width of the maximum diffraction peak of the mixed material in the X-ray diffraction using the CuKα ray is 1.0° or smaller, the cathode active material having a high capacity can be obtained.

A method for manufacturing a non-aqueous electrolyte battery according to the present invention comprises a cathode having a cathode active material represented by a composition of LiₓFe_{1-y}M_{y}PO₄ (M is at least a kind of materials such as Mn, Cr, Co, Cu, Ni, V, Mo, Ti, Zn, Al, Ga, Mg, B, and Nb, x is located within a range expressed by 0.05≤ x ≤ 1.2, and y is located within a range expressed by 0 ≤ y < 0.8.), an anode having an anode active material and a non-aqueous electrolyte. The method for manufacturing a non-aqueous electrolyte battery comprises a mixing step of mixing at least Fe₃(PO₄)₂^{·}nH₂O (n designates the number of hydrates ranging from 0 to 8.) with Li₃PO₄; and a sintering step of sintering a mixed material obtained in the mixing step when the cathode active material is synthesized, wherein a half-value width of a maximum diffraction peak of the mixed material in an X-ray diffraction using CuKα ray is 1.0° or smaller.

In the method for manufacturing a non-aqueous electrolyte battery according to the present invention, since the half-value width of the maximum diffraction peak of the mixed material in the X-ray diffraction using the CuKα ray is 1.0° or smaller during a step of synthesizing the cathode active material, the cathode active material having a high capacity can be obtained. Consequently, the non-aqueous electrolyte battery having a high capacity can be obtained.

Still another objects of the present invention and specific advantages obtained by the present invention will become more apparent from the explanation of embodiments by referring to the drawings.

### Brief Description of the Drawings

Fig. 1 is a sectional view showing one structural example of a coin type non-aqueous electrolyte battery produced by applying the present invention thereto.
Fig. 2 is a plan view showing one structural example of a non-aqueous electrolyte secondary battery having a thin shape.
Fig. 3 is a sectional view showing another structural example of a non-aqueous electrolyte secondary battery having a thin shape.

### Best Mode for Carrying Out the Invention

Now, embodiments of the present invention will be described below.

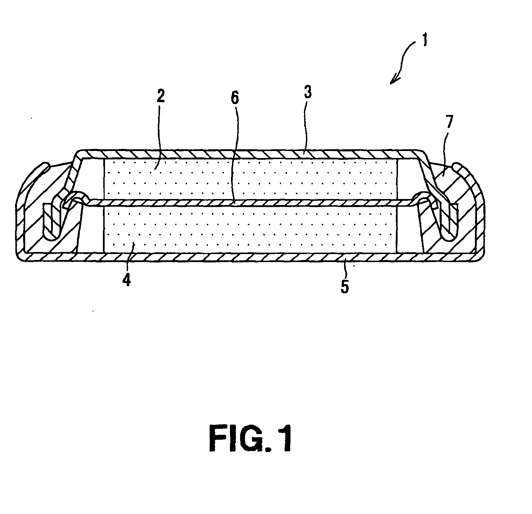

One structural example of a non-aqueous electrolyte battery produced by applyingthe present invention thereto is shown in Fig. 1. This non-aqueous electrolyte battery 1 comprises an anode 2, an anode can 3 for accommodating the anode 2, a cathode 4, a cathode can 5 for accommodating the cathode 4, a separator 6 disposed between the cathode 4 and the anode 2, and an insulating gasket 7. The anode can 3 and the cathode can 5 are filled with non-aqueous electrolyte solution.

The anode 2 is made of, for instance, a metallic lithium foil serving as an anode active material. When a material capable of doping and dedoping lithium is used as the anode active material, an anode active material layer including the anode active material is formed on an anode current collector in the anode 2. As the anode current collector, for instance, a nickel foil or the likes is used.

As the anode active materials capable of doping and dedoping lithium, metallic lithium, lithium alloys, conductive polymers doping lithium, layer compounds such as carbon materials, metallic oxides, etc. are employed. As a binding agent included in the anode active material layer, a well-known resin material or the like ordinarily used as a binding agent of the anode active material layer of this type of the non-aqueous electrolyte battery can be employed.

The anode can 3 serves to accommodate the anode 2 and forms an external anode of the non-aqueous electrolyte battery 1.

In the cathode 4, a cathode active material layer including a cathode active material is formed on a cathode current collector. In the non-aqueous electrolyte battery 1, as the cathode active material, LiₓFe_{1-y}M_{y}PO₄ having an olivine structure that is produced by a below-described method is used (Here, M is at least a kind of materials such as Mn, Cr, Co, Cu, Ni, V, Mo, Ti, Zn, Al, Ga, Mg, B, and Nb, x is located within a range expressed by 0.05 ≤ x ≤ 1.2, and y is located within a range expressed by 0 ≤ y < 0.8.). As the cathode current collector, for instance, an aluminum foil or the like is used. As a binding agent included in the cathode active material layer, a well-known resin material or the like ordinarily used as the binding agent of the cathode active material layer of this kind of non-aqueous electrolyte battery can be employed.

The cathode can 5 serves to accommodate the cathode 4 and forms an external cathode of the non-aqueous electrolyte battery 1.

The separator 6 serves to separate the cathode 4 from the anode 2 and can use well-known materials ordinarily used as the separator of this kind of non-aqueous electrolyte battery. For example, a polymer film such as polypropylene is used. The thickness of the separator needs to be thin as much as possible in view of the relation between lithium ionic conductivity and energy density. Specifically, the thickness of the separator is suitably, for instance, 50 µm or smaller.

The insulating gasket 7 is incorporated in and formed integrally with the anode can 3. The insulating gasket 7 serves to prevent the leakage of the non-aqueous electrolyte solution with which the anode can 3 and the cathode can 5 are filled.

As the non-aqueous electrolyte solution, solution in which electrolyte is dissolved in a non-proton type non-aqueous solvent is employed.

As the non-aqueous solvent, there may be used, for instance, propylene carbonate, ethylene carbonate, butylene carbonate, vinylene carbonate, γ-butyrolactone, sulfolane, 1,2-dimethoxyethane, 1,2-diethoxyethane, 2-methyl tetrahydrofuran, 3-methyl-1,3-dioxolane, methyl propionate, methyl butyrate, dimethyl carbonate, diethyl carbonate, dipropyl carbonate, etc. Especially, cyclic carbonates such as propylene carbonate, vinylene carbonate, etc. and chain carbonates such as dimethyl carbonate, diethyl carbonate, dipropyl carbonate, etc. are preferably used from the viewpoint of voltage stability. Further, such non-aqueous solvents may be independently used or two or more kinds of them may be mixed together and the mixture may be used.

As the electrolytes dissolved in the non-aqueous solvent, lithium salts such as LiPF₆, LiClO₄, LiAsF₆, LiBF₄, LiCF₃SO₃, LiN(CF₃SO₂)₂, etc. may be used. LiPF₆ and LiBF₄ are preferably used among these lithium salts.

Now, a method for manufacturing the above-described non-aqueous electrolyte battery 1 will be described.

The cathode active material represented by LiₓFe_{1-y}M_{y}PO₄ having an olivine structure (M is at least a kind of materials such as Mn, Cr, Co, Cu, Ni, V, Mo, Ti, Zn, Al, Ga, Mg, B, and Nb, x is located within a range expressed by 0.05 ≤ x ≤ 1.2, and y is located within a range expressed by 0 ≤ y < 0.8.) is firstly synthesized. Here, a case in which LiFePO₄ is synthesized will be described as an example.

Initially, a lithium phosphate compound is adequately mixed with an iron phosphate compound. Specifically, Li₃PO₄ is mixed with Fe₃(PO₄)₂^{·}8H₂O so that the element ratio lithium to iron is 1 : 1 to obtain a mixed material. At this time, as a conductive material, for instance, carbon powder may be added thereto. When the metal element M other than Fe is included in the cathode active material, salt of the above metal M, for instance, phosphate may be added thereto.

Then, the mixed material is pulverized by a milling operation using, for instance, a planetary ball mill. At this time, according to the present invention, the mixed material is pulverized so that the half-value width of the maximum diffraction peak of the mixed material in an X-ray diffraction using CuKα ray is 1.0° or smaller. In this synthesis, the maximum diffraction peak in the X-ray diffraction is 2 θ = 13.1 ± 0.3°. As shown in an embodiment described below, the mixed material is pulverized so that the half-value width of the maximum diffraction peak in the X-ray diffraction is 1.0° or smaller, and accordingly, the cathode active material in which a high discharge capacity is obtained can be synthesized. In order to set the half-value width of the maximum diffraction peak of the mixed material in the X-ray diffraction to 1.0° or smaller, pulverizing conditions can be adjusted by for instance, performing a milling operation for a suitable time.

Then, the milled mixed material is sintered at prescribed temperature for a prescribed time so that LiFePO₄ having the olivine structure can be obtained.

As described above, in the method for producing the cathode active material, when the mixed material as a material for synthesizing the cathode active material is pulverized, the mixed material is pulverized so as to have 1.0° or smaller of the half-value width of the maximum diffraction peak of the mixed material in the X-ray diffraction using the CuKα ray. Accordingly; the cathode active material in which the high discharge capacity is got can be obtained. Further, according to the present invention, even when a battery is not manufactured, it can be decided whether or not the battery is good as a final product during a step of synthesizing the cathode active material and synthesizing conditions can be also made clear. Consequently, a wasteful cost or process for adjusting the quality of the cathode active material is not necessary and the cathode active material can be produced in a stable way.

The non-aqueous electrolyte battery 1 using LiFePO₄ obtained as described above as the cathode active material is manufactured in such a manner as described below.

As the anode 2, an anode active material and a binding agent are firstly dispersed in a solvent to prepare a slurry anode composite mixture. Then, the obtained anode composite mixture is uniformly applied and dried on a current collector to form an anode active material layer. Thus, the anode 2 is formed. As a binding agent of the anode composite mixture, a well-known binding agent can be used. Besides, a well-known additive agent or the like can be added to the anode composite mixture. Metallic lithium serving as the anode active material can be directly employed also as the anode 2.

As the cathode 4, LiFePO₄ as the cathode active material and the binding agent are firstly dispersed in a solvent to prepare a slurry cathode composite mixture. Then, the obtained cathode composite mixture is uniformly applied to the current collector and dried to form a cathode active material layer. Thus, the cathode 4 is formed. As a binding agent of the cathode composite mixture, not only a well-known binding agent may be employed, but also a well-known additive agent or the like may be added to the cathode composite mixture.

The non-aqueous electrolyte solution is prepared by dissolving electrolyte salt in the non-aqueous solvent.

Then, the anode 2 is accommodated in the anode can 3, the cathode 4 is accommodated in the cathode can 5, and the separator 6 made of polypropylene porous film or the like is disposed between the anode 2 and the cathode 4. The anode can 3 and the cathode can 5 are filled with the non-aqueous electrolyte solution and the anode can 3 and the cathode can 5 are fixed by caulking them through the insulating gasket 7 to complete the non-aqueous electrolyte battery 1.

In the above-described method for manufacturing the non-aqueous electrolyte battery 1, the mixed material as a material for synthesizing the cathode active material is pulverized. At this time, the mixed material is pulverized so that the half-value width of the maximum diffraction peak of the mixed material in the X-ray diffraction using the CuKα ray is 1.0° or smaller. Accordingly, the cathode active material in which a high discharge capacity is obtained can be synthesized. The non-aqueous electrolyte battery 1 manufactured by using such a cathode active material has the high discharge capacity.

In the above-described embodiment, although the non-aqueous electrolyte battery using the non-aqueous electrolyte solution is described as an example, the present invention is not limited thereto. The present invention may be applied to a solid electrolyte battery using a solid electrolyte including a simple substance or a mixture of conductive polymer compounds or a gel electrolyte battery using a gel electrolyte in which non-aqueous electrolyte solution is gelled by a matrix polymer.

As the above-described conductive polymer compounds included in the solid polymer electrolyte, are specifically exemplified silicon, acryl, acrylonitrile, modified polyphosphazene polymers, polyethylene oxide, polypropylene oxide, fluorine based polymers, or compound polymers, bridged polymers, modified polymers of these compounds, etc. As the fluorine based polymers, there are exemplified poly (vinylidene fluoride), poly (vinylidene fluoride-co-hexafluoropropylene), poly (vinylidene fluoride-co-tetrafluoroethylene), poly (vinylidene fluoride-co-trifluoroethylene), etc.

As the matrix polymer, when a polymer simple substance or gel electrolyte using it shows an ionic conductivity of 1 mS/cm or higher at room temperature, the chemical structure of the matrix polymer is not especially limited to a specific structure. As the matrix polymers, there may be enumerated polyvinylidene fluoride, polyacrylonitrile, polyethylene oxide, polysiloxane compounds, polyphosphazene compounds, polypropylene oxide, polymethyl methacrylate, polymethacrylonitrile, polyether compounds, etc.

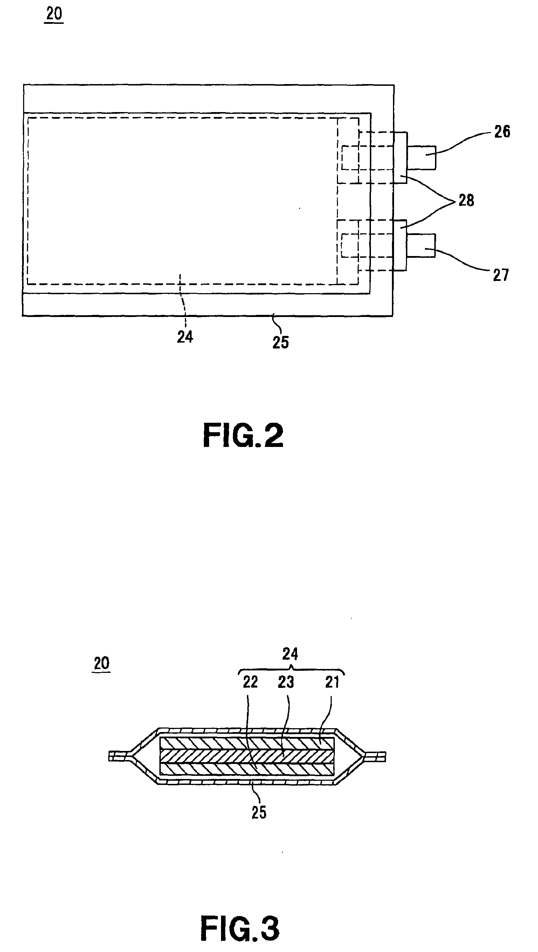

Figs. 2 and 3 show structural examples of a non-aqueous electrolyte secondary battery 20 having a thin shape. In the non-aqueous electrolyte secondary battery 20, a battery element 24 formed by superposing a cathode 21 having a cathode active material layer on an anode 22 having an anode active material layer through a separator 23 is sealed in an outer package film 25.

A current collector of the cathode 21 is connected to a cathode lead 26. A current collector of the anode 22 is connected to an anode lead 27. Resin films 28 are interposed between the cathode lead 26 and the anode lead 27 and the seal parts of the outer package film 25 to ensure the insulating characteristics of these leads 26 and 27. One ends of the cathode lead 26 and the anode lead 27 are drawn outside.

The active material layers of the cathode 21 and the anode 22 are respectively impregnated with gel electrolytes and the gel electrolytes are solidified. The cathode 21 is superposed on the anode 22 through the separator 23 so that these gel electrolyte layers are opposed to each other. Accordingly, the separator 23 is also partly impregnated with the gel electrolyte or a non-aqueous solvent in which electrolyte salt included therein is dissolved.

In the above-described embodiments, although the secondary battery is described as an example, the present invention is not limited thereto and may be applied to a primary battery. The battery manufactured by applying the present invention thereto is not especially limited, in view of its form, to a cylindrical type, a prismatic type, a coin type, a button type, etc, and further, the battery may have various kinds of size such as thin, large, etc.

Now, Examples and Comparative Examples carried out to recognize the effects of the present invention will be described. Although the following Examples are described by employing specific compound names and numeric values or the like, it is to be understood that the present invention is not limited to these Examples.

### (Example 1)

Initially, Li₃PO₄ was mixed with Fe₃(PO₄)₂^{·}8H₂O so that the element ratio lithium to iron was 1 : 1. Further, carbon powder whose particle diameter is 10 µm or smaller was added thereto so as to occupy 10 % of all of a sintered material to obtain a mixed material. The mixed material was supplied to a vessel made of alumina and milled by a planetary ball mill under the conditions including weight ratio of sample/alumina ball of 50 %, rotating speed of 250 rpm, and operating time of 10 hours. After an XRD measurement was carried out for a milled sample, the sample was sintered in a ceramic crucible by an electric furnace in a nitrogen atmosphere at 600°C for 5 hours to obtain LiFePO₄.

LiFePO₄ obtained in such a way was used as a cathode active material to manufacture a coin shaped non-aqueous electrolyte battery. Initially, LiFePO₄ of 85 parts by weight, acetylene black of 10 parts by weight, and poly (vinylidene fluoride) of 5 parts by weight which is fluorine powder as a binder were mixed together. Then, the mixture was compression-molded to obtain a pellet shaped cathode.

Further, a lithium metal foil was punched out to have substantially the same diameter as that of the cathode. Thus, an anode was obtained. Further, LiPF₆ was dissolved in a mixed solvent of equal volume of propylene carbonate and dimethyl carbonate in the ratio of 1 mol/l to prepare non-aqueous electrolyte solution.

The cathode obtained as described above was accommodated in a cathode can, the anode was accommodated in an anode can, and a separator was disposed between the cathode and the anode. The cathode can and the anode can were filled with the non-aqueous electrolyte solution and the cathode can and the anode can were fixed by caulking them to manufacture a 2016 type coin shaped battery.

### (Example 2)

A cathode active material was synthesized and a coin shaped battery was manufactured by using this cathode active material in the same fashion as that of the Example 1 except that milling time by the planetary ball mill was 8 hours.

### (Example 3)

A cathode active material was synthesized and a coin shaped battery was manufactured by using this cathode active material in the same fashion as that of the Example 1 except that milling time by the planetary ball mill was 4 hours.

### (Example 4)

A cathode active material was synthesized and a coin shaped battery was manufactured by using this cathode active material in the same fashion as that of the Example 1 except that milling time by the planetary ball mill was 2 hours.

### (Example 5)

A cathode active material was synthesized and a coin shaped battery was manufactured by using this cathode active material in the same fashion as that of the Example 1 except that milling time by the planetary ball mill was 1 hours.

### (Comparative Example 1)

A cathode active material was synthesized and a coin shaped battery was manufactured by using this cathode active material in the same fashion as that of the Example 1 except that milling time by the planetary ball mill was 30 minutes.

### (Comparative Example 2)

A cathode active material was synthesized and a coin shaped battery was manufactured by using this cathode active material in the same fashion as that of the Example 1 except that milling time by the planetary ball mill was 15 minutes.

An X-ray structural analysis was carried out for the mixed materials used for synthesizing the cathode active materials in the Examples and the Comparative Examples. As an X-ray source, CuKα ray was used. In addition, the measurement was carried out under the conditions including tube voltage of 50 kV, tube current of 200 mA, scanning step width of 0.02°, emission slit width of 0.5° and light receiving slit width of 0.15 mm. Then, the half-value width of a diffraction peak in 2 θ ≒ 13.1° in which strength became maximum in a got diffraction profile was obtained.

Further, initial discharge capacities of the manufactured coin shaped batteries were measured.

The measured results of the half-value widths of diffraction peak in 2 θ ≒ 13.1° of the mixed materials respectively used in the Examples and the Comparative Examples, and the initial discharge capacities of the batteries are shown in Table 1.

**[Table 1]**

| | Milling Time (hour) | 2θ ≒ 13.1° Half-value Width of Peak (°) | Initial Discharge Capacity (mAh/g) |
|---|---|---|---|
| Example 1 | 10 | 0.05 | 159.8 |
| Example 2 | 8 | 0.10 | 156.0 |
| Example 3 | 4 | 0.21 | 147.4 |
| Example 4 | 2 | 0.55 | 130.7 |
| Example 5 | 1 | 1.04 | 100.3 |
| Comparative Example 1 | 0.5 | 1.21 | 87.4 |
| Comparative Example 2 | 0.25 | 1.50 | 63.6 |

As apparent from the Table 1, in the synthesis of the cathode active material, while adequate discharge capacities are not obtained in the Comparative Examples 1 to 2 in which the half-value widths in the diffraction peak in 2 θ ≒ 13.1° of the mixed materials are larger than 1.0°, high discharge capacities not lower than 100 mAh/g are obtained in the Examples 1 to 7 in which the half-value widths in the diffraction peak in 2 θ ≒ 13.1° of the mixed materials are 1.0° or smaller.

Now, gel electrolyte batteries were manufactured to evaluate capacities.

### (Example 6)

A mixed material having the half-value width of 0.07° in a diffraction peak of 2 θ ≒ 13.1° was firstly used to synthesize LiFePO₄ in the same manner as that of the Example 1. LiFePO₄ of 85 parts by weight as a cathode active material, acetylene black of 10 parts by weight, and poly (vinylidene fluoride) of 5 parts by weight which is fluorine resin powder as a binder were mixed together, and N-methyl pyrrolidone was added to the mixture to prepare a slurry cathode composite mixture. The cathode composite mixture was applied to an aluminum foil as a cathode current collector to manufacture a cathode through drying by heating and pressing steps.

As for an anode, graphite powder of 90 parts by weight was mixed with fluorine resin powder of 10 parts by weight as a binder and N-methyl pyrrolidone was added to the mixture to prepare a slurry anode composite mixture. The anode composite mixture was applied to a copper foil as an anode current collector, and punched out to a circular form according to the diameter of a cell through drying by heating and pressing steps to manufacture an anode.

As a gel electrolyte, polyvinylidene fluoride with which hexafluoropropylene was copolymerized at the rate of 6.9 wt% was mixed with non-aqueous electrolyte solution and dimethyl carbonate. The mixture was agitated and dissolved to prepare sol electrolyte solution. Here, the non-aqueous electrolyte solution was prepared by dissolving LiPF₆ at the rate of 0.85 mol/kg in a mixed solvent obtained by mixing ethylene carbonate with propylene carbonate in the ratio of 6 : 4. Further, vinylene carbonate was added to the non-aqueous electrolyte solution at the rate of 0.5 wt% to prepare gel electrolyte solution. Then, the gel electrolyte solution was applied to the cathode and dried to remove the solvent and form a gel electrolyte layer on the cathode.

The cathode obtained in such a manner was accommodated in a cathode can, the anode was accommodated in an anode can, and a separator was disposed between the cathode and the anode. The cathode can and the anode can were fixed together by caulking them to manufacture a coin shaped gel electrolyte battery.

### (Example 7)

A mixed material having the half-value width of 0.98° in a diffraction peak of 2 θ ≒ 13.1° was used to synthesize a cathode active material in the same manner as that of the Example 1 and a coin shaped gel electrolyte battery was manufactured by employing this cathode active material in the same manner as that of the Example 6.

The initial discharge capacities of the gel electrolyte batteries of the Examples 6 and 7 manufactured as described above were measured. Results thereof are shown in Table 2.

**[Table 2]**

| | 2 θ ≒ 13.1° Half-value Width of Peak (°) | Initial Discharge Capacity (mAh/g) |
|---|---|---|
| Comparative Example 6 | 0.07 | 158.1 |
| Comparative Example 7 | 0.98 | 107.7 |

As apparent from the Table 2, in the synthesis of the cathode active material, the half-value widths in the diffraction peak in 2 θ ≒ 13.1° of the mixed materials are smaller than 1.0°, high discharge capacities not lower than 100 mAh/g are also obtained in the gel electrolyte batteries.

The present invention is not limited to the above-described embodiments explained by referring to the drawings. It is apparent for a person with ordinary skill in the art that various changes, substitutions or the equivalence thereto may be made without departing from the attached scope of claims and the gist thereof.

### Industrial Applicability

As described above, according to the present invention, in the synthesis of the cathode active material, when the mixed material as a material for synthesizing the cathode active material is pulverized, the mixed material is pulverized so that the half-value width of the maximum diffraction peak of the mixed material in the X-ray diffraction using the CuKα ray is 1.0° or smaller. Accordingly, in the present invention, the cathode active material in which the high discharge capacity is got can be obtained. Further, according to the present invention, even when a battery is not manufactured, it can be decided whether or not the battery is good as a final product during a step of synthesizing the cathode active material and synthesizing conditions can be also made clear.

Consequently, a wasteful cost or process for adjusting the quality of the cathode active material is not necessary and the cathode active material having a high capacity can be synthesized in a stable way. The cathode active material obtained in such a manner is used so that the non-aqueous electrolyte battery having a high capacity can be manufactured in a stable manner.

## Claims

1. A method for manufacturing a cathode active material comprising:
a mixing step of mixing at least Fe₃(PO₄)₂^{·}nH₂O (n designates the number of hydrates ranging from 0 to 8.) with Li₃PO₄; and
a sintering step of sintering a mixed material obtained in the mixing step when the cathode active material represented by a composition of LiₓFe_{1-y}M_{y}PO₄ (M is at least a kind of materials such as Mn, Cr, Co, Cu, Ni, V, Mo, Ti, Zn, Al, Ga, Mg, B, and Nb, x is located within a range expressed by 0.05 ≤ x ≤ 1.2, and y is located within a range expressed by 0 ≤ y < 0.8.) is synthesized, wherein a half-value width of a maximum diffraction peak of the mixed material in an X-ray diffraction using CuKα ray is 1.0° or smaller.

2. The method for manufacturing a cathode active material according to claim 1, wherein the maximum diffraction peak of the mixed material in the X-ray diffraction using the CuKα ray is 2 θ = 13.1 ± 0.3°.

3. The method for manufacturing a cathode active material according to claim 1, further comprising a pulverizing step of pulverizing the mixed material.

4. A method for manufacturing a non-aqueous electrolyte battery comprising a cathode having a cathode active material represented by a composition of LiₓFe_{1-y}M_{y}PO₄ (M is at least a kind of materials such as Mn, Cr, Co, Cu, Ni, V, Mo, Ti, Zn, Al, Ga, Mg, B, and Nb, x is located within a range expressed by 0.05 ≤ x ≤ 1.2, and y is located within a range expressed by 0 ≤ y < 0.8.), an anode having an anode active material, and a non-aqueous electrolyte, the method comprising;
a mixing step of mixing at least Fe₃(PO₄)₂^{·}nH₂O (n designates the number of hydrates ranging from 0 to 8.) with Li₃PO₄; and
a sintering step of sintering a mixed material obtained in the mixing step when the cathode active material is synthesized, wherein a half-value width of a maximum diffraction peak of the mixed material in an X-ray diffraction using CuKα ray is 1.0° or smaller.

5. The method for manufacturing a non-aqueous electrolyte battery according to claim 4, wherein the maximum diffraction peak of the mixed material in the X-ray diffraction using the CuKα ray is 2 θ = 13.1 ± 0.3°.

6. The method for manufacturing a non-aqueous electrolyte battery according to claim 4, further comprising a pulverizing step of pulverizing the mixed material.

7. The method for manufacturing a non-aqueous electrolyte battery according to claim 4, wherein the non-aqueous electrolyte is a gel electrolyte in which non-aqueous electrolyte solution obtained by dissolving electrolyte salt in a non-aqueous solvent is gelled by a matrix polymer.
